# EUROPÄISCHE PATENTSCHRIFT

(11) **EP 2 915 627 B1**
(45) Veröffentlichungstag und Bekanntmachung des Hinweises auf die Patenterteilung: **24.08.2016**
(21) Anmeldenummer: 15156045.5
(22) Anmeldetag: 23.02.2015
(51) Int. Cl.: B23Q 17/24, B23Q 17/09, G01V 8/20, B23Q 3/155

(54) **VORRICHTUNG ZUR WERKZEUGKONTROLLE**
DEVICE FOR CONTROLLING TOOLS
DISPOSITIF DESTINÉ AU CONTRÔLE D'OUTIL

(30) Priorität: 04.03.2014 DE 102014102837
(43) Veröffentlichungstag der Anmeldung: 09.09.2015
(73) Patentinhaber: SICK AG, 79183 Waldkirch (DE)
(72) Erfinder: Erdmann, Frank, 79183 Waldkirch (DE); Kienzler, Stefan, 79874 Breitnau (DE); Eble, Johannes, 79183 Waldkirch (DE); Siefert, Gerald, 77933 Lahr-Sulz (DE); Burger, Michael, 79263 Simonswald (DE)
(74) Vertreter: Rieger, Daniel-Stephan

(56) Entgegenhaltungen:
- EP-A1- 1 873 442
- EP-A1- 1 903 356
- EP-A2- 1 170 601
- EP-A2- 2 574 964
- DE-A1- 10 227 710
- DE-A1- 10 233 258
- DE-A1-102005 003 220

## Beschreibung

Die vorliegende Erfindung betrifft eine Vorrichtung zur Werkzeugkontrolle.

Die DE 10 2005 003 220 B4 offenbart eine Werkzeugwechseleinrichtung mit einem Lichtvorhang. Zum Prüfen wird im einfachsten Fall beispielsweise ein Bohrer oder ein anderes zu prüfendes Werkzeug in einen von Lichtschranken gebildeten Lichtvorhang gefahren. Der Bohrer unterbricht nun die Lichtwege der Lichtschranken und lässt die übrigen Lichtwege frei. Somit ist seine Länge in Stufen überprüfbar. Ist der Bohrer abgebrochen fällt dies unmittelbar auf. Es ist somit eine Bohrerbruchkontrolle durchführbar. Hierzu genügt im einfachsten Falle auch eine einzelne Lichtschranke, da der Bohrer über eine kontrollierte axiale Bewegung eines Doppelgreifers in die Lichtschranke geführt wird und ein Positionssensor für die Position des Bohrers vorgesehen ist. Nachteilig bei dem genannten Stand der Technik ist, dass alle Lichtstrahlen des Lichtgitters aktiv sein müssen, um verschiedene Bohrerlängen zu prüfen oder bei nur einer einzelnen Lichtschranke der Bohrer zum Prüfen in Achsrichtung des Bohrers bewegt werden muss.

Die EP 1 903 356 A1 offenbart ein Lichtgitter zur Absicherung eines Gefahrenbereichs einer Maschine und zur Erkennung von Objekten, wobei eine Auswerteeinheit zur separaten Ansteuerung und Auswertung der einzelnen Empfangselemente vorhanden ist.

Die EP 2 574 964 A2 offenbart ein Triggerlichtgitter zum Erfassen der Position von Behältern, wobei eine Triggereinheit zur selektiven Verarbeitung einzelner Ausgangssignale ausgebildet ist.

Die DE 102 33 258 A1 offenbart ein Lichtgitter mit einzelnen Strahlachsen, wobei den Strahlachsen über die Steuereinheit jeweils ein Bitwort zugeordnet ist, wobei über wenigstens ein Bit BLK der Bitworte die Strahlachsen in vorgegebene Bereiche unterteilbar sind.

Die DE 102 27 710 A1 offenbart ein Lichtgitter mit einer Schnittstelleneinheit mit einer vorgegebenen Anzahl von Sendeelementen, so dass das oder jedes Sendeelement optische Überbrückungssteuersignale in einen zugeordneten Empfänger einspeist.

Die EP 1 170 601 A2 offenbart ein Lichtgitter, wobei wenigstens ein Lichtleiter zur Übertragung des Synchronisationssignals vorgesehen ist.

Die EP 1 873 442 A1 offenbart ein Lichtgitter, wobei zur Objekterkennung die Änderungen der jeweils obersten und/oder untersten abgedeckten Lichtstrahlen ausgewertet und auf Übereinstimmung mit gespeicherten Referenz-Bitmustern verglichen werden.

Eine Aufgabe der Erfindung besteht darin, eine verbesserte Vorrichtung zur Werkzeugkontrolle bereitzustellen die eine höhere Produktivität aufweist und flexibler eingesetzt werden kann.

Die Aufgabe wird gemäß Anspruch 1 gelöst durch eine Vorrichtung zur Werkzeugkontrolle mit einem Bearbeitungsbereich für Werkstücke, einem Werkzeugmagazin für Werkzeuge und einem bewegbaren Werkzeughalter, der zwischen dem Werkzeugmagazin und dem Bearbeitungsbereich bewegbar ist, wobei zwischen dem Bearbeitungsbereich und dem Werkzeugmagazin ein Lichtgitter zur Kontrolle des Werkzeuges angeordnet ist, wobei zwischen einem ersten Lichtgittergehäuse und einem zweiten Lichtgittergehäuse des Lichtgitters Lichtachsen gebildet sind, wobei die Lichtachsen durch eine Steuer- und Auswerteeinheit einzeln aktivierbar sind und wobei eine Anzahl und/oder eine Position der Lichtachsen zur zeitoptimierten Auswertung des Werkzeuges einstellbar ist.

Eine Lichtachse ist dabei durch Lichtstrahlen zwischen einem Lichtsender und einem Lichtempfänger des Lichtgitters gebildet. Durch den Lichtempfänger wird dabei eine Unterbrechung der Lichtstrahlen bzw. der Lichtachsen detektiert. Aufgrund der Unterbrechung wird ein Objektfeststellungssignal und/oder Objektdaten ausgegeben. Dabei ist es vorgesehen, dass das Objektfeststellungssignal bzw. die Objektdaten optional nur dann ausgegeben wird, wenn die Unterbrechung auch tatsächlich stattfindet. D. h. zwischen den Messungen bzw. Unterbrechungen der Lichtachsen können durch das Lichtgitter auf demselben Ausgang auch andere Daten bzw. Signale ausgegeben werden, bzw über einen Eingang auch Daten bzw. Signale eingelesen werden.

Gemäß der Erfindung kann die Steuer- und Auswerteeinheit im Lichtgitter selbst vorgesehen sein oder auch außerhalb der Lichtgittergehäuse angeordnet sein. Die Steuer- und Auswerteeinheit ist ggf. auch nur in einem der Lichtgittergehäuse vorgesehen, in welchem die Lichtempfänger untergebracht sind.

Gemäß der vorliegenden Erfindung ist es nun möglich, eine sehr schnelle Kontrolle des Werkzeuges im Produktivbetrieb der Werkzeugmaschine durchzuführen, da die Anzahl bzw. die Position der Lichtachsen zur Auswertung des Werkzeuges einstellbar ist. Dabei braucht der Verarbeitungsablauf der Werkzeugmaschine nicht oder nur in sehr geringem Maße modifiziert werden.

Gemäß der Erfindung ist das Lichtgitter zur Kontrolle des Werkzeuges zwischen dem Bearbeitungsbereich und dem Werkzeugmagazin angeordnet. Dadurch ist es möglich, das Werkzeug auf dem ohnehin notwendigen Weg zwischen Bearbeitungsbereich und dem Werkzeugmagazin gleichzeitig zu prüfen, ohne dass das Werkzeug an eine zusätzliche Prüfposition gefahren werden muss.

Dabei wird das Werkzeug von dem Werkzeughalter gehalten. D.h. das Werkzeug muss nicht extra in einer bestimmten Prüfvorrichtung angeordnet werden, sondern kann direkt, ohne dass eine zusätzliche Position vorgesehen werden muss, in dem Werkzeughalter vermessen werden. Es ist somit möglich, das zu prüfende Werkzeug schnell durch das Lichtgitter zu bewegen, ohne dass das Werkzeug abgebremst werden muss.

Dabei braucht das Werkzeugmagazin auch keine zusätzliche Bewegung in Achsrichtung des Werkzeuges in das Lichtgitter durchzuführen, da die Anzahl der Lichtachsen zur Auswertung des Werkzeuges einstellbar ist. D. h. je nach zu prüfendem Werkzeug werden durch unterschiedliche Anzahlen und/oder Positionen der aktivierten Lichtachsen unterschiedliche Detektionsbereiche bzw. unterschiedliche Überwachungsbereiche des Lichtgitters aktiviert.

Dadurch, dass nur eine bestimmte Anzahl von Lichtachsen an einer bestimmten Position aktiviert ist, reduziert sich der Auswerteaufwand und damit die Auswertezeit gegenüber einer Auswertung aller Lichtachsen derart, dass eine schnellere Auswertung der Lichtachsen vorgenommen werden kann.

Die erfindungsgemäße Vorrichtung ist damit ohne größere Modifikationen in eine bestehende Anwendung integrierbar und dadurch auch insbesondere einfach nachrüstbar. Auch bei einer nachgerüsteten Anwendung kann das zu prüfende Werkzeug schnell durch das Lichtgitter bewegt werden, ohne dass das Werkzeug abgebremst werden muss.

Bei den Werkzeugen kann es sich insbesondere um Bohrer, Fräsköpfe, Schneidwerkzeuge, Hobelwerkzeuge, Sägeblätter, Stanzwerkzeuge usw. handeln. Besonders bevorzugt ist das Werkzeug ein Bohrer oder ein Stahlbohrer. Dabei beträgt der Durchmesser des Bohrers bevorzugt mindestens 3 mm. Jedoch ist es auch möglich, kleinere Durchmesser zu detektieren.

In Weiterbildung der Erfindung ist die Anzahl und/oder Position der Lichtachsen zur Auswertung des Werkzeuges durch die Steuer- und Auswerteeinheit automatisch eingestellt, abhängig von Werkzeugkenndaten. Dadurch ist es möglich unterschiedliche Werkzeuge automatisch zu vermessen, ohne dass jedes einzelne Werkzeug eingelernt werden muss. Die Werkzeugkenndaten sind optional in der Steuer- und Auswerteeinheit gespeichert.

Eine Inbetriebnahme des Lichtgitters in der Vorrichtung zur Werkzeugkontrolle kann dabei folgende Schritte aufweisen. Das Lichtgitter wird dabei in einem ersten Schritt an einer vorgesehenen Position zwischen Bearbeitungsbereich und dem Werkzeugmagazin derart montiert, dass das Werkzeug durch den Werkzeughalter durch das Lichtgitter hindurch bewegt wird.

In einem zweiten Schritt werden die elektrischen Anschlüsse an eine Stromversorgung und eine Steuerung bzw. Maschinensteuerung vorgenommen. Eine Verbindung zwischen Lichtgitter und Steuerung bzw. Maschinensteuerung kann dabei über eine in der Automatisierungstechnik übliche Schnittstelle, beispielsweise IO-Link, erfolgen.

In einem dritten Schritt werden optional Schaltschwellen bei freiem Lichtweg eingelernt, so dass das Lichtgitter eine Unterbrechung einer Lichtachse optimal detektieren kann, so dass beispielsweise keine Übersteuerungseffekte eintreten.

Dieser dritte Schritt kann im laufenden Produktivbetrieb zyklisch wiederholt werden, so dass beispielsweise eine Verschmutzung der Frontscheiben der Lichtgittergehäuse kompensiert werden kann. Das Einlernen der Schaltschwellen wird dabei zwischen den Messzyklen vorgenommen, so dass keine Beeinträchtigung des Produktivbetriebes stattfindet.

In einem vierten Schritt wird das Lichtgitter in der Einbauposition kalibriert. Hierzu wird ein Bezugswerkzeug oder ein Einrichtwerkzeug mit bekannten Abmessungen, insbesondere bekannte Länge in einer langsameren Geschwindigkeit als im Produktivbetrieb durch das Lichtgitter bewegt. Hierbei sind alle Lichtachsen des Lichtgitters aktiv. Dieser Vorgang wird beispielsweise durch das Senden eines Kommandos von der Steuerung an das Lichtgitter gestartet. Das Lichtgitter ermittelt dabei beim Durchfahren des Bezugswerkzeugs oder Einrichtwerkzeugs die Position der Werkzeugspitze. Mit diesem Positionswert und den Referenzmaßen des Bezugswerkzeugs oder Einrichtwerkzeugs ist das Lichtgitter in der Lage, für die unterschiedlichen bekannten Werkzeugabmessungen einen jeweiligen eingeschränkten Messbereich bzw. einen eingeschränkten Überwachungsbereich einzustellen.

In einem speziellen Kalibrierverfahren kann auch ein Umrechnungsfaktor ermittelt werden, indem die Werkzeugspitze mit bekannten Abmessungen im gesamten Überwachungsbereich gemessen wird. Aus den Werkzeugabmessungen und der Position der Werkzeugspitze wird anschließend der Umrechnungsfaktor ermittelt. Bei einer späteren Überprüfung des Werkzeuges auf Bruch oder Beschädigung wird dem Lichtgitter die Abmessungen, insbesondere Länge des zu prüfenden Werkzeuges mitgeteilt. Aus diesen Abmessungen wird mittels des bei der Kalibrierung ermittelten Umrechnungsfaktors ein eingeschränkter Überwachungsbereich bzw. die Anzahl und/oder die Position der Lichtachsen für dieses Werkzeug berechnet. Durch die Reduktion des Überwachungsbereichs bzw. der Anzahl Lichtachsen kann nun die zeitliche Abfolge der Strahlüberprüfung schneller durchgeführt werden, da nur ein Teil der optischen Strahlen vom Lichtgitter, bzw. der Steuer und Auswerteeinheit ausgewertet wird.

In Weiterbildung der Erfindung weist das Lichtgitter mindestens einen Eingang zum Einlesen der Werkzeugkenndaten auf. Dieser Eingang kann beispielsweise Bestandteil einer Schnittstelle des Lichtgitters sein, beispielsweise eine in der Automatisierungstechnik übliche IO-Link Schnittstelle. Dieser Eingang bzw. diese Schnittstelle ist mit einem Ausgang der Steuerung bzw. Maschinensteuerung verbunden. Die Werkzeugkenndaten werden dann entweder von der Steuerung bzw. Maschinensteuerung über den Eingang an das Lichtgitter übertragen, oder das Lichtgitter holt die Werkzeugkenndaten über den Eingang von der Steuerung bzw. Maschinensteuerung ab.

Gemäß einer bevorzugten Ausführungsform ist die Steuer- und Auswerteeinheit des Lichtgitters derart ausgebildet ist, dass das Werkzeug während einer hohen Bewegungsgeschwindigkeit bevorzugt bis zu 3 m/s, insbesondere bis zu 1 m/s quer zu den Lichtachsen messbar ist. Das wird dadurch erreicht, dass lediglich ein Teil der möglichen Lichtachsen angesteuert und ausgewertet wird, wodurch das Werkzeug während der Bewegung im Produktivbetrieb geprüft werden kann.

Gemäß einer bevorzugten Ausführungsform sind die Lichtachsen von mindestens zwei Lichtsendern in dem ersten Lichtgittergehäuse und mindestens zwei gegenüberliegenden Lichtempfängern in dem zweiten Lichtgittergehäuse gebildet. Dadurch wird ein Lichtgitter mit einzelnen Lichtschranken gebildet. Dabei kann es vorgesehen sein, dass alle Lichtsender in dem ersten Lichtgittergehäuse angeordnet sind und alle Lichtempfänger in dem zweiten Lichtgittergehäuse angeordnet sind. Jedoch kann es auch vorgesehen sein, dass Lichtsender und Lichtempfänger in dem ersten Lichtgittergehäuse angeordnet sind und gegenüberliegende zugehörige Lichtempfänger und Lichtsender in dem zweiten Lichtgittergehäuse angeordnet sind, wobei Lichtschranken durch gegenüberliegende Lichtsender und Lichtempfänger gebildet sind.

Gemäß einer alternativen Ausführungsform sind die Lichtachsen von mindestens einem Lichtsender und mindestens einem Lichtempfänger in dem ersten Lichtgittergehäuse und einem gegenüberliegenden Reflektor gebildet. Dadurch werden durch die Lichtsender und die Lichtempfänger in demselben Lichtgittergehäuse und dem gegenüberliegenden Reflektor Reflexionslichtschranken gebildet.

In Weiterbildung der Erfindung sind die Lichtachsen von mindestens einem Lichtsender und mindestens einem Lichtempfänger in dem ersten Lichtgittergehäuse gebildet, wobei die Lichtsender und die Lichtempfänger einen Lichttaster bilden. Bei dem Lichttaster kann es sich beispielsweise um einen TOF-Lichttaster handeln welcher nach dem Prinzip der Lichtlaufzeit arbeitet, oder einem Triangulationslichttaster, wobei der Lichtempfänger ein ortsauflösendes Empfangselement aufweist.

In einer bevorzugten Ausführungsform sind die Lichtachsen parallel zueinander angeordnet. Dadurch wird ein gleichmäßiges Überwachungsraster im Überwachungsbereich gebildet, wodurch die Messauflösung an jeder Stelle zwischen den Lichtgittergehäusen identisch ist. Dadurch ist es beispielsweise sehr einfach möglich, eine Längenmessung für Werkzeuge durchzuführen, wenn sich das Werkzeug mit einer Werkzeugachse quer zu den Lichtachsen zwischen den Lichtgittergehäusen befindet und dadurch entsprechende Lichtachsen unterbrochen werden.

In einer weiteren bevorzugten Ausführungsform sind die Lichtachsen in einem Winkel ≤ 20° zueinander angeordnet. Das kann dadurch erreicht werden, dass jeweils versetzt angeordnete Lichtsender und Lichtempfänger eine Lichtachse bilden. Beispielsweise kann dabei auch ein Lichtsender des einen Lichtgittergehäuses mit zwei versetzt angeordneten Lichtempfängern des anderen Lichtgittergehäuses zwei Lichtachsen bilden, die einen Winkel zueinander aufweisen. Weiter ist es vorgesehen, dass zwei Lichtsender des einen Lichtgittergehäuses mit einem Lichtempfänger des anderen Lichtgittergehäuses zwei Lichtachsen bilden, die einen Winkel zueinander aufweisen. Dadurch, dass die beiden im Winkel angeordneten Lichtachsen an einem Lichtgittergehäuse zusammentreffen, verringert sich der Abstand der Lichtachsen in Richtung der Lichtgittergehäuse, wodurch sich die Auflösung in Richtung der Lichtgittergehäuse an bestimmten Stellen quer zu der Lichtachse erhöht. Dadurch kann an den Stellen mit höherer Lichtstrahldichte bzw. höherer Auflösung das Werkzeug genauer vermessen werden. Die Lichtachsen können dabei auch gekreuzt angeordnet sein.

In einer besonders bevorzugten Ausführungsform sind parallele Lichtachsen und in einem Winkel zueinander angeordnete Lichtachsen angeordnet. Dadurch wird die Lichtstrahldichte bzw. die Auflösung des Lichtgitters noch weiter erhöht. Jeder Lichtsender und jeder Lichtempfänger bildet dabei mit mindestens zwei gegenüberliegenden Lichtempfängern bzw. Lichtsendern mindestens zwei Lichtachsen. Es ist dabei weiter bevorzugt, dass Lichtsender und Lichtempfänger mit mindestens drei gegenüberliegenden Lichtempfängern bzw. Lichtsendern mindestens drei Lichtachsen bilden.

In Weiterbildung der Erfindung ist das Werkzeug zur Werkzeugkontrolle außerhalb einer Mitte zwischen den Lichtgittergehäusen des Lichtgitters angeordnet.

In Weiterbildung der Erfindung ist das Werkzeug zur Werkzeugkontrolle an der Stelle des Lichtgitters angeordnet, an der die Lichtstrahldichte bzw. Auflösung des Lichtgitters durch die Lichtachsen am höchsten ist. Das Werkzeug wird zur Prüfung an der Stelle quer zu den Lichtachsen angeordnet, an der die Auflösung des Lichtgitters am höchsten ist.

In Weiterbildung der Erfindung ist das Werkzeug zur Werkzeugkontrolle zwischen den Lichtgittergehäusen angeordnet, wobei ein Abstand zu dem ersten Lichtgittergehäuse oder dem zweiten Lichtgittergehäuse ca. 1/3 des Abstandes zwischen den Lichtgittergehäusen beträgt und ein Abstand zu dem zweiten Lichtgittergehäuse oder ersten Lichtgittergehäuse ca. 2/3 des Abstandes zwischen den Lichtgittergehäusen beträgt. An diesen Stellen ist die Auflösung bei einer Kreuzstrahlanordnung am höchsten, wodurch eine genaue Messung von Werkzeugen an dieser Stelle am höchsten ist. Da die Lichtachsen vorzugsweise durch Infrarotlicht gebildet sind, sind die Lichtachsen für das menschliche Auge nicht sichtbar. Jedoch kann der Anwender dennoch einfach die höchste Auflösung bzw. die höchste Lichtstrahldichte durch die Anordnung des Werkzeuges gemäß den Abständen 1/3 zu 2/3 zwischen den Lichtgittergehäusen auswählen.

In einer besonders bevorzugten Ausführungsform der Erfindung findet an dem Werkzeug auf dem Weg vom Werkzeugmagazin zum Werkstück durch das Lichtgitter eine erste Messung statt und auf dem Weg vom Werkstück zum Werkzeugmagazin eine zweite Messung statt und aus einer Differenz beider Messergebnisse ist ein Werkzeugbruch detektierbar. Zunächst wird davon ausgegangen, dass das Werkzeug unbeschädigt in dem Werkzeugmagazin vorhanden ist. D. h. bei der ersten Messung wird der unbeschädigte Zustand des Werkzeuges festgestellt. Weiter wird davon ausgegangen, dass das Werkzeug bei einer Anwendung in dem Bearbeitungsbereich möglicherweise beschädigt wird oder einem Verschleiß unterworfen ist. Demnach wird bei der zweiten Messung das beschädigte oder verschlissene Werkzeug detektiert. Das beschädigte oder verschlissene Werkzeug kann gemäß der Erfindung nun besonders einfach dadurch detektiert werden, dass das erste Messergebnis mit dem zweiten Messergebnis verglichen wird und bei einer Differenz der Messergebnisse eine Beschädigung oder ein Verschleiß vorliegt. Dadurch kann eine Beschädigung bei einer Vielzahl von Werkzeugen einfach detektiert werden, ohne dass die genauen Abmessungen der Werkzeuge dem Lichtgitter bekannt sind. Dadurch können auch neu hinzugefügte Werkzeuge geprüft werden ohne dass die Vorrichtung zur Werkzeugkontrolle oder das Lichtgitter aktualisiert werden muss. Dabei können geringe Abweichungen von wenigen Millimetern oder auch Abmessungen kleiner 1 mm detektiert werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: eine Vorrichtung zur Werkzeugkontrolle;
- Figur 2: ein Lichtgitter mit parallelen Lichtachsen zur Werkzeugkontrolle;
- Figur 3: ein Lichtgitter mit gekreuzten Lichtachsen zur Werkzeugkontrolle;
- Figur 4: ein Lichtgitter mit parallelen und gekreuzten Lichtachsen zur Werkzeugkontrolle;
- Figur 5: ein Lichtgitter mit parallelen und gekreuzten Lichtachsen zur Werkzeugkontrolle;
- Figur 6: ein Lichtgitter mit Reflektor mit parallelen und gekreuzten Lichtachsen zur Werkzeugkontrolle;
- Figur 7: eine Vorrichtung zur Werkzeugkontrolle mit einem Lichtgitter und einer Steuerung.

In den nachfolgenden Figuren sind identische Teile mit identischen Bezugszeichen versehen. Bei den Figuren handelt es sich um schematische Darstellungen.

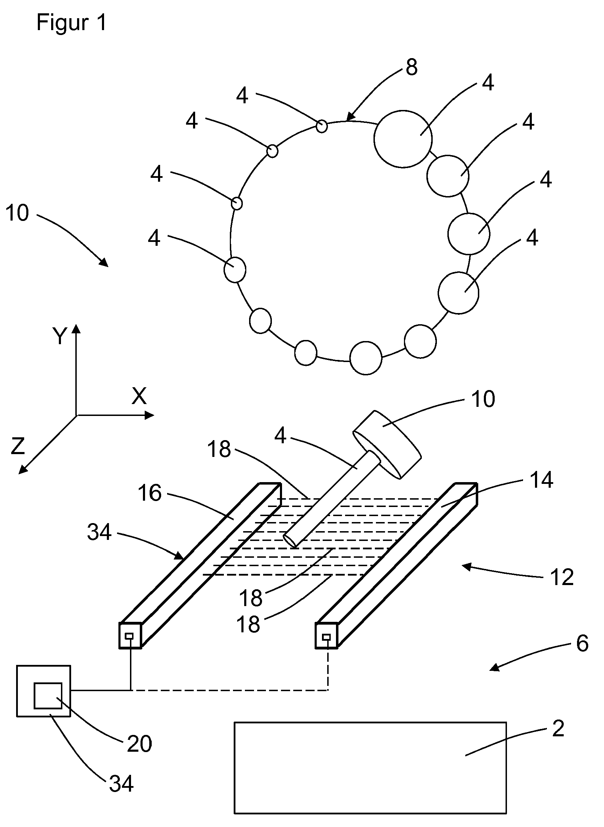

Figur 1 zeigt eine Vorrichtung zur Werkzeugkontrolle mit einem Bearbeitungsbereich 6 für Werkstücke 2, einem Werkzeugmagazin 8 für Werkzeuge 4 und einem bewegbaren Werkzeughalter 10, der zwischen dem Werkzeugmagazin 8 und dem Bearbeitungsbereich 6 bewegbar ist, wobei zwischen dem Bearbeitungsbereich 6 und dem Werkzeugmagazin 8 ein Lichtgitter 12 zur Kontrolle des Werkzeuges 4 angeordnet ist, wobei zwischen einem ersten Lichtgittergehäuse 14 und einem zweiten Lichtgittergehäuse 16 des Lichtgitters 12 Lichtachsen 18 gebildet sind, wobei die Lichtachsen 18 durch eine Steuer- und Auswerteeinheit 34 einzeln aktivierbar sind und wobei eine Anzahl und/oder eine Position der Lichtachsen 18 zur zeitoptimierten Auswertung des Werkzeuges 4 einstellbar ist.

Gemäß Figur 1 kann die Steuer- und Auswerteeinheit 34 im Lichtgitter 12 selbst vorgesehen sein oder auch außerhalb des Lichtgittergehäuses 14 oder 16 angeordnet sein. In der Steuer- und Auswerteeinheit 34 sind optional Werkzeugkenndaten 20 gespeichert. Die Steuer- und Auswerteeinheit 34 ist ggf. auch nur in einem der Lichtgittergehäuse 14 oder 16 vorgesehen, in welchem die Lichtempfänger untergebracht sind.

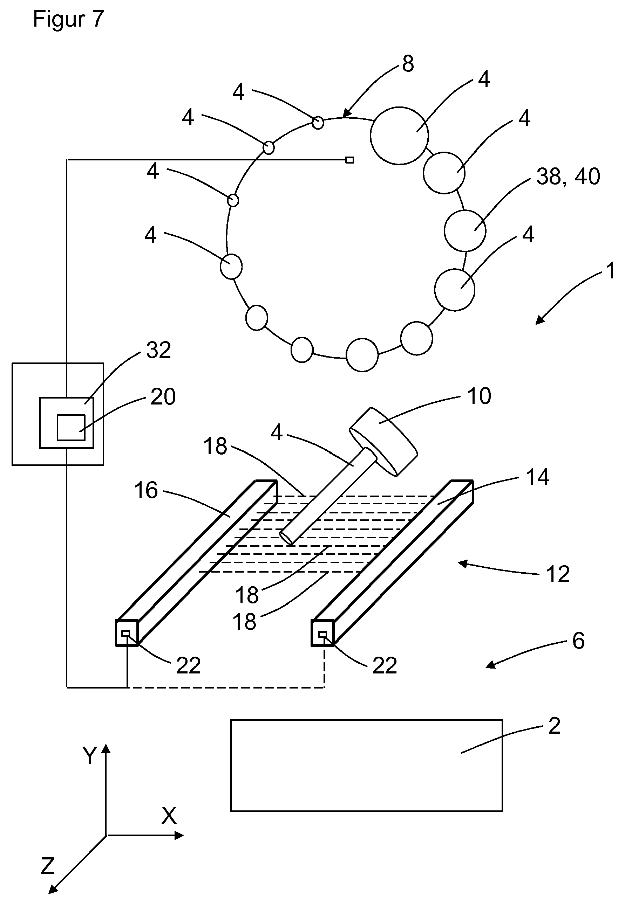

In Figur 1 sind drei Achsen definiert. Eine erste Achse X zeigt in Richtung der Lichtachsen 18. Eine zweite Achse Y zeigt in Richtung quer zu den Lichtachsen 18 und in Bewegungsrichtung des Werkzeugs 4. Eine dritte Achse Z zeigt in Richtung einer Längsachse der Lichtgittergehäuse 14 und 16. Diese Definition ist auch in Figur 7 angegeben.

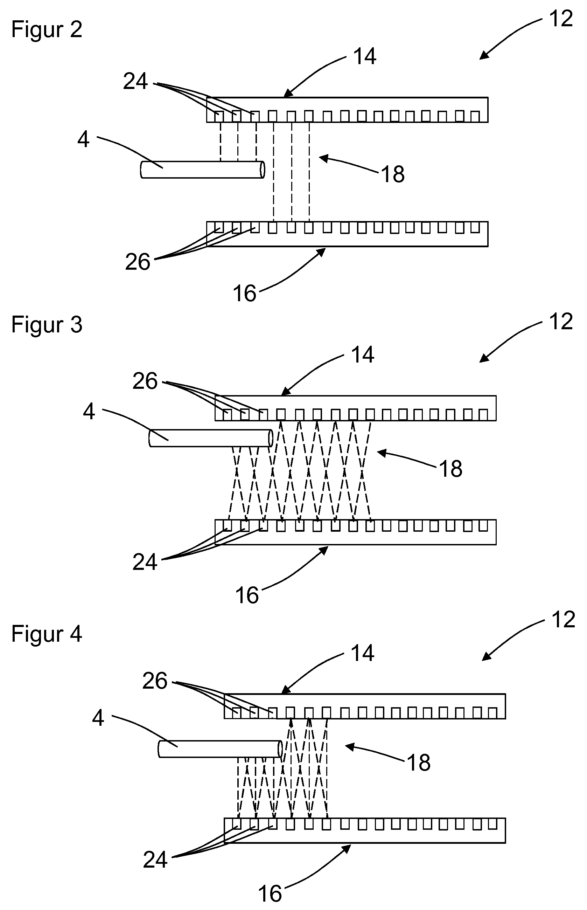

Gemäß Figur 2 sind die Lichtachsen 18 von Lichtsendern 24 in dem ersten Lichtgittergehäuse 14 und gegenüberliegenden Lichtempfängern 26 in dem zweiten Lichtgittergehäuse 16 gebildet. Dadurch wird ein Lichtgitter 12 mit quasi einzelnen Lichtschranken gebildet. Dabei kann es vorgesehen sein, dass alle Lichtsender 24 in dem ersten Lichtgittergehäuse 14 angeordnet sind und alle Lichtempfänger 26 in dem zweiten Lichtgittergehäuse 16 angeordnet sind. Jedoch kann es auch vorgesehen sein, dass Lichtsender 24 und Lichtempfänger 26 in dem ersten Lichtgittergehäuse 14 angeordnet sind und gegenüberliegende zugehörige Lichtempfänger 26 und Lichtsender 24 in dem zweiten Lichtgittergehäuse 16 angeordnet sind, wobei Lichtschranken durch Lichtsender 24 und gegenüberliegende Lichtempfänger 26 gebildet sind.

Weiter sind die Lichtachsen 18 gemäß Figur 2 parallel zueinander angeordnet. Dadurch wird ein gleichmäßiges Überwachungsraster gebildet, wodurch die Messauflösung an jeder Stelle zwischen den Lichtgittergehäusen 14 und 16 identisch ist. Dadurch ist es beispielsweise sehr einfach möglich, eine Längenmessung für das Werkzeug 4 durchzuführen, wenn das Werkzeug 4 wie in Figur 2 dargestellt quer zu den Lichtachsen 18 zwischen den Lichtgittergehäusen 14 und 16 angeordnet ist und dadurch entsprechende Lichtachsen 18 unterbrochen werden.

Bei dem Werkzeug 4 kann es sich insbesondere um Bohrer, insbesondere Stahlbohrer, Fräsköpfe, Schneidwerkzeuge, Hobelwerkzeuge, Sägeblätter, Stanzwerkzeuge usw. handeln. Dabei beträgt der Durchmesser des Bohrers bevorzugt mindestens 3 mm. Jedoch können auch kleinere Durchmesser detektiert werden.

Gemäß Figur 2 ist das Werkzeug 4 während einer hohen Bewegungsgeschwindigkeit von bis zu 3 m/s und insbesondere von bis zu 1 m/s quer zu den Lichtachsen 18 bzw. quer zu einer Überwachungsfläche messbar. Das wird dadurch erreicht, dass lediglich ein Teil der möglichen Lichtachsen 18 durch die Steuer- und Auswerteeinheit angesteuert und ausgewertet wird, wodurch das Werkzeug während der Bewegung quer zu den Lichtachsen in Richtung der zweiten Achse Y im Produktivbetrieb geprüft werden kann.

Gemäß Figur 3 sind die Lichtachsen 18 beispielsweise in einem Winkel ≤ 20° zueinander angeordnet, wobei die Lichtachsen 18 gemäß den Figuren nur schematisch dargestellt sind. Das kann dadurch erreicht werden, dass jeweils versetzt angeordnete Lichtsender 24 und Lichtempfänger 26 eine Lichtachse 18 bilden. Beispielsweise kann dabei auch ein Lichtsender 24 des einen Lichtgittergehäuses mit zwei versetzt angeordneten Lichtempfängern 26 des anderen Lichtgittergehäuses zwei Lichtachsen 18 bilden, die einen Winkel zueinander aufweisen. Weiter ist es vorgesehen, dass zwei Lichtsender 24 des einen Lichtgittergehäuses mit einem Lichtempfänger 26 des anderen Lichtgittergehäuses zwei Lichtachsen 18 bilden, die einen Winkel zueinander aufweisen. Dadurch, dass die beiden im Winkel angeordneten Lichtachsen 18 an einem Lichtgittergehäuse zusammentreffen, verringert sich der Abstand der Lichtachsen 18 in Richtung des Lichtgittergehäuses, wodurch sich die Auflösung in Richtung des Lichtgittergehäuses an bestimmten Stellen quer zu der Lichtachse 18 erhöht. Dadurch kann an den Stellen mit höherer Auflösung das Werkzeug 4 genauer vermessen werden. Die Lichtachsen 18 sind dabei gemäß Figur 3 gekreuzt angeordnet.

Gemäß Figur 3 ist das Werkzeug 4 zur Werkzeugkontrolle außerhalb einer Mitte zwischen den Lichtgittergehäusen 14 und 16 des Lichtgitters 12 angeordnet. Insbesondere wird das Werkzeug 4 zur Prüfung bzw. Messung an der Stelle quer zu den Lichtachsen 18 angeordnet, an der die Auflösung des Lichtgitters 12 am höchsten ist.

Gemäß Figur 4 sind parallele und nicht parallele Lichtachsen 18 angeordnet. Dadurch wird die Auflösung des Lichtgitters 12 noch weiter erhöht. Jeder Lichtsender 24 und jeder Lichtempfänger 26 bildet dabei mit mindestens zwei gegenüberliegenden Lichtempfängern 26 bzw. Lichtsendern 24 mindestens zwei Lichtachsen 18. Es ist dabei weiter vorgesehen, dass Lichtsender 24 und Lichtempfänger 26 mit mindestens drei gegenüberliegenden Lichtempfängern 26 bzw. Lichtsendern 24 mindestens drei Lichtachsen 18 bilden.

Gemäß Figur 4 ist das Werkzeug 4 zur Werkzeugkontrolle zwischen den Lichtgittergehäusen 14 und 16 angeordnet, wobei ein Abstand zu dem ersten oder zweiten Lichtgittergehäuse ca. 1/3 des Abstandes zwischen den Lichtgittergehäusen beträgt und ein Abstand zu dem zweiten oder ersten Lichtgittergehäuse ca. 2/3 des Abstandes zwischen den Lichtgittergehäusen 14 und 16 beträgt. An diesen Stellen ist die Auflösung bei einer Kreuzstrahlanordnung bei üblichen Abständen der Lichtsender 24 bzw. Lichtempfänger 26 am höchsten, wodurch eine genaue Messung von Werkzeugen 4 an dieser Stelle am besten ist.

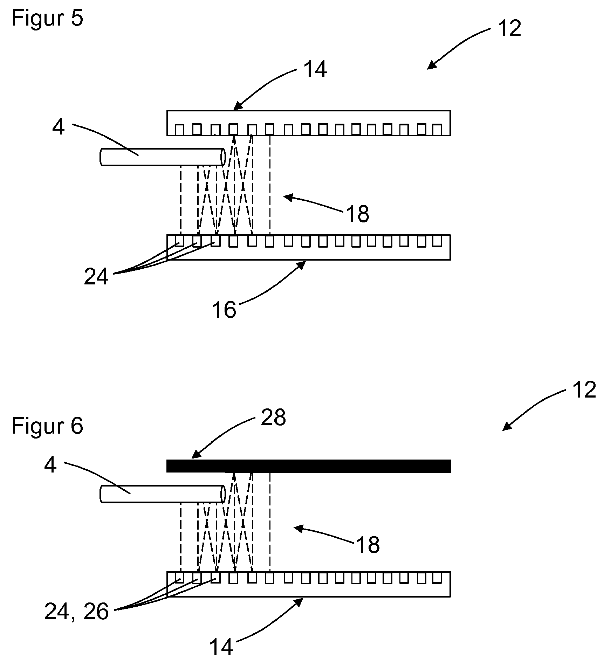

Gemäß Figur 5 ist eine unterschiedliche Auflösung bzw. unterschiedliche Detektionsdichte an unterschiedlichen Stellen vorgesehen. Zunächst sind am Rand des Überwachungsbereiches nur parallele Lichtachsen 18 vorgesehen. In der Mitte des Überwachungsbereiches sind parallele Lichtachsen 18 und in einem Winkel angeordnete Lichtachsen 18 vorgesehen, so dass in diesem mittleren Bereich des Überwachungsbereiches eine höhere Auflösung erreicht wird. Dadurch kann ein größerer Überwachungsbereich quer zu den Lichtachsen realisiert werden, wobei die Anzahl der Lichtachsen jedoch nicht in allen Bereichen gleich hoch ist, wodurch eine Auswertzeit reduziert bleibt und dennoch an einer gewünschten Stelle eine höhere Auflösung vorhanden ist.

Gemäß Figur 6 sind die Lichtachsen 18 von einem Lichtsender 24 und einem Lichtempfänger 26 in dem ersten Lichtgittergehäuse 14 und einem Reflektor 28 gebildet. Dadurch werden durch die Lichtsender 24 und die Lichtempfänger 26 in demselben Lichtgittergehäuse und dem Reflektor 28 Reflexionslichtschranken gebildet. Es kann jedoch auch vorgesehen sein, dass die Lichtsender 24 und die Lichtempfänger 26 in einem Lichtgittergehäuse jeweils Lichttaster bilden.

Figur 7 zeigt die Vorrichtung gemäß Figur 1. Gemäß Figur 7 wird die Anzahl und/oder Position der Lichtachsen 18 zur Auswertung bzw. Prüfung des Werkzeuges 4 abhängig von Werkzeugkenndaten 20 automatisch eingestellt. Die Werkzeugkenndaten sind beispielsweise in einer Steuerung 32 oder einer Maschinensteuerung hinterlegt.

Eine Inbetriebnahme des Lichtgitters 12 in der Vorrichtung zur Werkzeugkontrolle kann dabei folgende Schritte aufweisen. Das Lichtgitter 12 wird dabei in einem ersten Schritt an einer vorgesehenen Position zwischen Bearbeitungsbereich 6 und dem Werkzeugmagazin 8 derart montiert, dass das Werkzeug 4 durch den Werkzeughalter 10 durch die Lichtachsen 18 des Lichtgitters 12 hindurch bewegbar ist.

In einem zweiten Schritt werden die elektrischen Anschlüsse an eine Stromversorgung und einer Steuerung 32 bzw. Maschinensteuerung vorgenommen. Eine Verbindung zwischen Lichtgitter 12 und Steuerung 32 bzw. Maschinensteuerung kann dabei über eine in der Automatisierungstechnik übliche Schnittstelle, beispielsweise IO-Link erfolgen. Das Lichtgitter 12 weist hierzu mindestens einen Eingang 22 auf. Jedoch können auch andere Schnittstellen bzw. Bussysteme vorgesehen sein.

In einem dritten Schritt werden optional Schaltschwellen bei freiem Lichtweg der Lichtachsen 18 eingelernt, so dass das Lichtgitter 12 eine Unterbrechung einer Lichtachse 18 optimal detektieren kann, so dass beispielsweise keine Übersteuerungseffekte eintreten.

In einem vierten Schritt wird das Lichtgitter 12 in der Einbauposition kalibriert. Hierzu wird ein Bezugswerkzeug 38 oder ein Einrichtwerkzeug 40 mit bekannten Abmessungen, insbesondere mit bekannter Länge in einer langsameren Geschwindigkeit als im Produktivbetrieb durch das Lichtgitter 12 bewegt. Hierbei sind alle Lichtachsen 18 des Lichtgitters 12 aktiv. Dieser Vorgang wird beispielsweise durch das Senden eines Kommandos von der Steuerung 32 an das Lichtgitter 12 gestartet. Das Lichtgitter 12 ermittelt dabei, beim Durchfahren des Bezugswerkzeugs 38 oder Einrichtwerkzeugs 40 die Position der Werkzeugspitze. Mit diesem Positionswert und den Referenzmaßen des Bezugswerkzeugs 38 oder Einrichtwerkzeugs 40 ist das Lichtgitter 12 in der Lage für die unterschiedlichen bekannten Werkzeugabmessungen der Werkzeuge 4 den jeweiligen eingeschränken Messbereich einzustellen.

Gemäß Figur 7 weist das Lichtgitter den Eingang 22 zum Einlesen der Werkzeugkenndaten 20 auf. Dieser Eingang 22 kann beispielsweise Bestandteil einer Schnittstelle des Lichtgitters 12 sein, beispielsweise die in der Automatisierungstechnik übliche IO-Link Schnittstelle. Dieser Eingang 22 bzw. diese Schnittstelle ist mit einem Ausgang der Steuerung 32 bzw. Maschinensteuerung verbunden. Die Werkzeugkenndaten 20 werden dann entweder von der Steuerung 32 bzw. Maschinensteuerung über den Eingang 22 an das Lichtgitter 12 übertragen, oder das Lichtgitter 12 holt die Werkzeugkenndaten 20 über den Eingang 22 von der Steuerung bzw. Maschinensteuerung ab.

Gemäß Figur 7 findet an dem Werkzeug 4 auf dem Weg vom Werkzeugmagazin 8 zum Werkstück 2 eine erste Messung statt und auf dem Weg vom Werkstück 2 zum Werkzeugmagazin 8 findet eine zweite Messung statt und aus einer Differenz beider Messergebnisse ist ein Werkzeugbruch detektierbar. Zunächst wird davon ausgegangen, dass das Werkzeug 4 unbeschädigt in dem Werkzeugmagazin 8 vorhanden ist. D. h. bei der ersten Messung wird der unbeschädigte Zustand des Werkzeuges 4 festgestellt und gespeichert bzw. zwischengespeichert. Weiter wird davon ausgegangen, dass das Werkzeug 4 bei einer Anwendung in dem Bearbeitungsbereich 6 möglicherweise beschädigt wird oder einem Verschleiß unterworfen ist. Demnach wird bei der zweiten Messung das beschädigte oder verschlissene Werkzeug 4 detektiert. Das beschädigte oder verschlissene Werkzeug 4 kann gemäß der Erfindung nun besonders einfach dadurch detektiert werden, dass das erste Messergebnis mit dem zweiten Messergebnis verglichen wird und bei einer Differenz der Messergebnisse eine Beschädigung oder ein Verschleiß vorliegt und erkannt wird. Dadurch kann eine Beschädigung bei einer Vielzahl von Werkzeugen 4 einfach detektiert werden, ohne dass die genauen Abmessungen der Werkzeuge 4 dem Lichtgitter 12 zunächst bekannt sind. Dadurch können auch neu hinzugefügte Werkzeuge 4 geprüft werden, ohne dass die Vorrichtung zur Werkzeugkontrolle oder das Lichtgitter 12 aktualisiert werden muss.

### Bezugszeichen:

- 1: Vorrichtung zur Werkzeugkontrolle
- 2: Werkstücke
- 4: Werkzeuge
- 6: Bearbeitungsbereich für Werkstücke
- 8: Werkzeugmagazin für Werkzeuge
- 10: Werkzeughalter
- 12: Lichtgitter
- 14: erstes Lichtgittergehäuse
- 16: zweites Lichtgittergehäuse
- 18: Lichtachsen
- 20: Werkzeugkenndaten
- 22: Eingang
- 24: Lichtsender
- 26: Lichtempfänger
- 28: Reflektor
- 30: Werkzeugmaschine
- 32: Steuerung
- 34: Steuer- und Auswerteeinheit
- 38: Bezugswerkzeug
- 40: Einrichtwerkzeug

- X: erste Achse
- Y: zweite Achse
- Z: dritte Achse

## Patentansprüche

1. Vorrichtung zur Werkzeugkontrolle mit einem Bearbeitungsbereich (6) für Werkstücke (2), einem Werkzeugmagazin (8) für Werkzeuge (4) und einem bewegbaren Werkzeughalter (10), der zwischen dem Werkzeugmagazin (8) und dem Bearbeitungsbereich (6) bewegbar ist, wobei zwischen dem Bearbeitungsbereich (6) und dem Werkzeugmagazin (8) ein Lichtgitter (12) zur Kontrolle des Werkzeuges (4) angeordnet ist, wobei zwischen einem ersten Lichtgittergehäuse (14) und einem zweiten Lichtgittergehäuse (16) des Lichtgitters (12) Lichtachsen (18) gebildet sind,
**dadurch gekennzeichnet, dass**
die Lichtachsen (18) durch eine Steuer- und Auswerteeinheit (34) einzeln aktivierbar sind und wobei eine Anzahl und/oder eine Position der Lichtachsen (18) zur zeitoptimierten Auswertung des Werkzeuges (4) einstellbar ist, wobei die Anzahl und/oder Position der Lichtachsen (18) zur Auswertung des Werkzeuges (4) abhängig von Werkzeugkenndaten (20) durch die Steuer- und Auswerteeinheit (34) automatisch eingestellt ist.

2. Vorrichtung nach Anspruch 2, **dadurch gekennzeichnet, dass** das Lichtgitter (12) mindestens einen Eingang (22) zum Einlesen der Werkzeugkenndaten (20) aufweist.

3. Vorrichtung nach einem der vorhergehenden Ansprüche, **dadurch gekennzeichnet, dass** die Steuer- und Auswerteeinheit (34) des Lichtgitters (12) derart ausgebildet ist, das lediglich ein Teil der möglichen Lichtachsen angesteuert und ausgewertet wird, so dass das Werkzeug (4) während einer hohen Bewegungsgeschwindigkeit von mehreren Metern pro Sekunde, insbesondere von bis zu 3 m/s, und insbesondere von bis zu 1 m/s quer zu den Lichtachsen messbar ist.

4. Vorrichtung nach einem der vorhergehenden Ansprüche, **dadurch gekennzeichnet, dass** die Lichtachsen (18) von mindestens zwei Lichtsendern (24) in dem ersten Lichtgittergehäuse (14) und mindestens zwei gegenüberliegenden Lichtempfängern (26) in dem zweiten Lichtgittergehäuse (16) gebildet sind.

5. Vorrichtung nach Anspruch 1, **dadurch gekennzeichnet, dass** die Lichtachsen von mindestens einem Lichtsender (24) und mindestens einem Lichtempfänger (26) in dem ersten Lichtgittergehäuse (14) und einem gegenüberliegenden Reflektor (28) gebildet sind.

6. Vorrichtung nach Anspruch 1, **dadurch gekennzeichnet, dass** die Lichtachsen von mindestens einem Lichtsender (24) und mindestens einem Lichtempfänger (26) in dem ersten Lichtgittergehäuse (14) gebildet sind, wobei die Lichtsender (24) und die Lichtempfänger (26) einen Lichttaster bilden.

7. Vorrichtung nach einem der vorhergehenden Ansprüche, **dadurch gekennzeichnet, dass** die Lichtachsen (18) parallel zueinander angeordnet sind.

8. Vorrichtung nach einem der vorhergehenden Ansprüche, **dadurch gekennzeichnet, dass** die Lichtachsen (18) in einem Winkel ≤ 20° zueinander angeordnet sind.

9. Vorrichtung nach einem der vorhergehenden Ansprüche 7 und 8, **dadurch gekennzeichnet, dass** parallele Lichtachsen (18) und in einem Winkel zueinander angeordnete Lichtachsen (18) angeordnet sind.

10. Verfahren zur Verwendung der Vorrichtung nach einem der vorhergehenden Ansprüche, **dadurch gekennzeichnet, dass** das Werkzeug (4) zur Werkzeugkontrolle außerhalb einer Mitte zwischen den Lichtgittergehäusen (14, 16) des Lichtgitters (12) angeordnet ist.

11. Verfahren zur Verwendung der Vorrichtung nach einem der vorhergehenden Ansprüche, **dadurch gekennzeichnet, dass** das Werkzeug (4) zur Werkzeugkontrolle an der Stelle des Lichtgitters angeordnet ist, an der die Auflösung des Lichtgitters durch die Lichtachsen am höchsten ist.

12. Verfahren zur Verwendung der Vorrichtung nach einem der vorhergehenden Ansprüche, **dadurch gekennzeichnet, dass** das Werkzeug (4) zur Werkzeugkontrolle zwischen den Lichtgittergehäusen (14, 16) angeordnet ist, wobei ein Abstand zu dem ersten Lichtgittergehäuse (14) oder zweiten Lichtgittergehäuse (16) ca. 1/3 des Abstandes zwischen den Lichtgittergehäusen (14, 16) beträgt und ein Abstand zu dem zweiten Lichtgittergehäuse (16) oder ersten Lichtgittergehäuse (14) ca. 2/3 des Abstandes zwischen den Lichtgittergehäusen (14, 16) beträgt.

13. Verfahren zur Verwendung der Vorrichtung nach einem der vorhergehenden Ansprüche, **dadurch gekennzeichnet, dass** an dem Werkzeug (4) auf dem Weg vom Werkzeugmagazin (8) zum Werkstück (2) durch das Lichtgitter (12) eine erste Messung stattfindet und auf dem Weg vom Werkstück (2) zum Werkzeugmagazin (8) eine zweite Messung stattfindet und aus einer Differenz beider Messergebnisse ein Werkzeugbruch detektierbar ist.

## Claims

1. An apparatus for tool monitoring having a machining region (6) for workpieces (2), having a tool magazine (8) for tools (4) and having a movable tool holder (10) which is movable between the tool magazine (8) and the machining region (6), wherein a light grid (12) for monitoring the tool (4) is arranged between the machining region (6) and the tool magazine (8), wherein light axes (18) are formed between a first light grid housing (14) and a second light grid housing (16) of the light grid (12),
**characterized in that**
the light axes (18) can be individually actuated by a control and evaluation unit (34), and with a number and/or a position of the light axes (18) being able to be set for a time-optimized evaluation of the tool (4), with the number and/or position of the light axes (18) for evaluating the tool (4) being set automatically by the control and evaluation unit (34) in dependence on the tool characteristics (20).

2. An apparatus in accordance with claim 1, **characterized in that** the light grid (12) has at least one input (22) for reading in the tool characteristics (20).

3. An apparatus in accordance with one of the preceding claims, **characterized in that** the control and evaluation unit (34) of the light grid (12) is configured such that only some of the possible light axes are selected and evaluated so that the tool (4) can be measured during a high movement speed of a plurality of meters per second, in particular of up to 3 m/s, and in particular of up to 1 m/s, transversely to the light axes.

4. An apparatus in accordance with any one of the preceding claims, **characterized in that** the light axes (18) are formed by at least two light transmitters (24) in the first light grid housing (14) and by at least two oppositely disposed light receivers (26) in the second light grid housing (16).

5. An apparatus in accordance with claim 1, **characterized in that** the light axes are formed by at least one light transmitter (24) and by at least one light receiver (26) in the first light grid housing (14) and by an oppositely disposed reflector (28).

6. An apparatus in accordance with claim 1, **characterized in that** the light axes are formed by at least one light transmitter (24) and at least one light receiver (26) in the first light grid housing (14), with the light transmitters (24) and the light receivers (26) forming a light sensor.

7. An apparatus in accordance with any one of the preceding claims, **characterized in that** the light axes (18) are arranged in parallel with one another.

8. An apparatus in accordance with any one of the preceding claims, **characterized in that** the light axes (18) are arranged at an angle ≤ 20° with respect to one another.

9. An apparatus in accordance with one of the preceding claims 7 and 8, **characterized in that** parallel light axes (18) and light axes (18) arranged at an angle with respect to one another are provided.

10. A method for using the apparatus in accordance with any one of the preceding claims, **characterized in that** the tool (4) for tool monitoring is arranged outside a center between the light grid housings (14, 16) of the light grid (12).

11. A method for using the apparatus in accordance with any one of the preceding claims, **characterized in that** the tool (4) for tool monitoring is arranged at the position of the light grid at which the resolution of the light grid through the light axes is the highest.

12. A method for using the apparatus in accordance with any one of the preceding claims, **characterized in that** the tool (4) for tool monitoring is arranged between the light grid housings (14, 16), with a spacing from the first light grid housing (14) or from the second light grid housing (16) amounting to approximately 1/3 of the spacing between the light grid housings (14, 16) and with a spacing from the second light grid housing (16) or from the first light grid housing (14) amounting to approximately 2/3 of the spacing between the light grid housings (14, 16).

13. A method for using the apparatus in accordance with any one of the preceding claims, **characterized in that** a first measurement takes place at the tool (4) on the way from the tool magazine (8) to the workpiece (2) through the light grid (12) and that a second measurement takes place on the way from the workpiece (2) to the tool magazine (8) and a tool fracture is detectable from a difference of the two measurement results.

## Revendications

1. Dispositif destiné au contrôle d'outils, comportant une zone de d'usinage (6) pour des pièces à oeuvrer (2), un magasin à outils (8) pour des outils (4) et un porte-outil mobile (10) qui est mobile entre le magasin à outils (8) et la zone d'usinage (6), une grille lumineuse (12) pour contrôler l'outil (4) étant agencée entre la zone d'usinage (6) et le magasin à outils (8), des axes lumineux (18) étant formés entre un premier boîtier de grille lumineuse (14) et un second boîtier de grille lumineuse (16) de la grille lumineuse (12),
**caractérisé en ce que**
les axes lumineux (18) sont activables individuellement par une unité de commande et d'évaluation (34) et un certain nombre et/ou une position des axes lumineux (18) est réglable en vue d'une évaluation optimisée dans le temps de l'outil (4), le nombre et/ou la position des axes lumineux (18) pour l'évaluation de l'outil (4) étant réglé(e) automatiquement en fonction de valeurs caractéristiques (20) de l'outil par l'unité de commande et d'évaluation (34).

2. Dispositif selon la revendication 1, **caractérisé en ce que** la grille lumineuse (12) comprend au moins une entrée (22) pour lire les valeurs caractéristiques (20) de l'outil.

3. Dispositif selon l'une des revendications précédentes, **caractérisé en ce que** l'unité de commande et d'évaluation (34) de la grille lumineuse (12) est réalisée de telle sorte qu'une partie seulement des axes lumineux possibles est pilotée et évaluée, de sorte que l'outil (4) est mesurable à une vitesse de mouvement élevée de plusieurs mètres par seconde, en particulier allant jusqu'à 3 m/s, notamment allant jusqu'à 1 m/s, transversalement aux axes lumineux.

4. Dispositif selon l'une des revendications précédentes, **caractérisé en ce que** les axes lumineux (18) sont formés par au moins deux émetteurs de lumière (24) dans le premier boîtier de grille lumineuse (14) et par au moins deux récepteurs de lumière (26) opposés dans le second boîtier de grille lumineuse (16).

5. Dispositif selon la revendication 1, **caractérisé en ce que** les axes lumineux sont formés par au moins un émetteur de lumière (24) et par au moins un récepteur de lumière (26) dans le premier boîtier de grille lumineuse (14) et par un réflecteur opposé (28).

6. Dispositif selon la revendication 1, **caractérisé en ce que** les axes lumineux sont formés par au moins un émetteur de lumière (24) et par au moins un récepteur de lumière (26) dans le premier boîtier de grille lumineuse (14), les émetteurs de lumière (24) et les récepteurs de lumière (26) forment un capteur photoélectrique.

7. Dispositif selon l'une des revendications précédentes, **caractérisé en ce que** les axes lumineux (18) sont agencés parallèlement les uns aux autres.

8. Dispositif selon l'une des revendications précédentes, **caractérisé en ce que** les axes lumineux (18) sont agencés sous un angle ≤ 20° les uns par rapport aux autres.

9. Dispositif selon l'une des revendications précédentes 7 et 8, **caractérisé en ce qu'**il est prévu des axes lumineux (18) parallèles et des axes lumineux (18) agencés sous un angle les uns par rapport aux autres.

10. Procédé d'utilisation du dispositif selon l'une des revendications précédentes, **caractérisé en ce que** pour contrôler l'outil, l'outil (4) est agencé à l'extérieur d'un centre entre les boîtiers de grille lumineuse (14, 16) de la grille lumineuse (12).

11. Procédé d'utilisation du dispositif selon l'une des revendications précédentes, **caractérisé en ce que** pour contrôler l'outil, l'outil (4) est agencé à l'emplacement de la grille lumineuse, auquel la résolution de la grille lumineuse à travers les axes lumineux est la plus élevée.

12. Procédé d'utilisation du dispositif selon l'une des revendications précédentes, **caractérisé en ce que** pour contrôler l'outil, l'outil (4) est agencé entre les boîtiers de grille lumineuse (14, 16), une distance au premier boîtier de grille lumineuse (14) ou au second boîtier de grille lumineuse (16) étant environ de 1/3 de la distance entre les boîtiers de grille lumineuse (14, 16), et une distance au second boîtier de grille lumineuse (16) ou au premier boîtier de grille lumineuse (14) étant environ de 2/3 de la distance entre les boîtiers de grille lumineuse (14, 16).

13. Procédé d'utilisation du dispositif selon l'une des revendications précédentes, **caractérisé en ce que** sur le chemin du magasin à outils (8) vers la pièce à oeuvrer (2) à travers la grille lumineuse (12), on effectue une première mesure, et sur le chemin de la pièce à oeuvrer (2) vers le magasin à outils (8), on effectue une seconde mesure, et à partir de la différence entre les deux résultats de mesure on peut détecter une rupture d'outil.
